(19) Europäisches Patentamt
European Patent Office
Office européen des brevets

(11) **EP 3 845 985 A1**

(12) **EUROPEAN PATENT APPLICATION**

(43) Date of publication:
**07.07.2021 Bulletin 2021/27**

(51) Int Cl.:
***G05B 23/02*** *(2006.01)*

(21) Application number: **19220224.0**

(22) Date of filing: **31.12.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME
KH MA MD TN**

(71) Applicant: **ABB Schweiz AG
5400 Baden (CH)**

(72) Inventor: **Ottewill, James
31-143 Krakow (PL)**

(74) Representative: **AOMB Polska Sp. z.o.o.
Ul. Emilii Plater 53
21st Floor
00-113 Warsaw (PL)**

(54) **METHOD FOR ESTIMATING CONFIGURATION PARAMETERS OF A PHOTOVOLTAIC ARRAY**

(57) The present invention relates to a estimation method of configuration parameters of a photovoltaic array based on values of power. The method comprises the steps of recording of DC power signal from at least one photovoltaic panel, estimating irradiance using a Clear Sky model, wherein the Clear Sky model is a model for estimating the solar irradiance reaching the surface of the earth, evaluating DC power signal to identify likely periods of a clear sky, determining power scaling, tilt and azimuth angle for a fixed panel conFiguration, a single axis panel conFiguration and a dual axis panel configuration, selecting from the following configurations: the fixed panel conFiguration, the single axis panel conFiguration and the dual axis panel configuration, the configuration with a minimum value of a cost function as true panel conFiguration, and storing power scaling, tracking axes, tilt and azimuth for current entity.

Fig. 1

**Description**

The present invention relates to a method of estimating the configuration parameters of a photovoltaic array based on measured values of power.

Solar is an increasingly important business, with the market growing particularly in the area of large utility size plants. Today, the reliable operation of the plant is of paramount importance to owners, guided by the concept of bankability. In the future, the main driver For decreasing costs is likely to come from improved lifecycle management and reduced operational.

Condition monitoring systems can have a major impact on reducing the Life-Cycle Costs of Plants. By providing precise information about a failure, condition monitoring systems can decrease downtime, increasing plant availability and improve Life-Cycle Costs. However, in contrast to applications such as Offshore Oil & Gas where the cost of failure is extremely high (and as a result condition monitoring is already highly utilized), in photovoltaic applications the gains from employing a condition monitoring system are less substantial. As a result, this necessitates a highly accurate condition monitoring system (i.e. minimized false alarms) with as few additional sensors as possible.

Those involved in solar plant operation primarily care about maximizing the energy generated ('yield') and availability of their photovoltaic assets. In order to identify poor performance in one or more assets it is necessary to have a reference system against which assets might be compared. This may either be a second comparable asset (benchmarking) or a model of the system (created on the basis of physical first-principles derivations, via data-driven approaches or a hybrid of the two). In order For such comparisons to be made fairly (compare 'Apples with Apples') some fundamental information about the asset being monitored is necessary.

Document US 9686122 B2 describes a method identifying the orientation of a renewable energy system by providing at least one orientation unknown renewable energy system, filtering said production data for favorable environmental conditions, identifying and saving the start of production, peak of production and end of production for each filtered day, calculating a skew of observation for at least one orientation unknown renewable energy system according to the start of production, peak of production and end of production for each filtered day, calculating an orientation for at least one orientation unknown renewable energy systems to said skew of observation and setting said orientation for said at least one orientation unknown renewable energy systems to become an orientation known renewable energy system that becomes part of a set of orientation known energy systems in a computer processor.

In photovoltaic applications, the parameters which fundamentally dictate the amount of energy generated by a plant are the amount of irradiance falling on a panel, which in turn is dependent on environmental conditions (cloud occlusions, atmospheric transmittance, etc.), the location of the sun (which for a given location, given in terms of longitude and latitude, can be calculated for a given time stamp) and the orientation of the photovoltaic panels (given in terms of azimuth and tilt angles). Unfortunately the azimuth and tilt angles of a string of photovoltaic panels are often not readily available or, if they are available, they are not input with sufficient accuracy to be useful. The situation is further complicated by the fact that panels may be mounted with either single- or two-axis trackers. These trackers are mechanical systems which attempt to orient the panels in a way that minimizes the incidence angles. In such cases it can be difficult to create a reference against which the output of a photovoltaic plant may be compared and poor performers / anomalies detected. Furthermore, forecasting future potential yields becomes extremely difficult.

A method for estimating configuration parameters of a photovoltaic array, according to the invention comprises the steps of: S1 recording of DC power signal from at least one photovoltaic panel, S3 estimating irradiance using a Clear Sky model, wherein the Clear Sky model is a model for estimating the solar irradiance reaching the surface of the earth, S4 evaluating DC power signal to identify likely periods of a clear sky,S5 determining power scaling, tilt and azimuth angle for a fixed panel configuration, a single axis panel configuration and a dual axis panel configuration,S6 selecting from the following configurations: the fixed panel configuration, the single axis panel configuration and the dual axis panel configuration, the configuration with a minimum value of a cost function as true panel configuration, S7 storing powerscaling, tracking axes, tilt and azimuth for current entity.

Preferably the method is characterized in that the method comprises one or more step of performing an action based on stored parameters, wherein the steps of performing an action are: S8a adjusting the photovoltaic array for better performance and/or S8b starting an alarm.

Preferably the method is characterized in that in the step S6 the cost function is calculated with the formula f1

$$J_N(PR_A, T, P_0, G_{i,k}) = \frac{1}{2m} \sum_{k=1}^{m} \left( \left( PR_A \cdot T \cdot P_0 \cdot \frac{G_{i,k}}{G_{i,ref}} \right) - P_{A,k} \right)^2$$

wherein N = 0,1,2 indicates the number of tracking angles, m is a number of data samples, $P_{A,k}$ is a measured DC power value of the photovoltaic array, $G_{i,ref}$ is a reference total irradiance reaching an aperture reaching the photovoltaic array,

$PR_A$ is an efficiency of the photovoltaic array, T is temperature coefficient, $P_0$ is an array power rating, $G_{i,k}$ is an estimated total irradiance reaching an aperture of the photovoltaic array as a function of a solar altitude angle $\alpha$, a tilt angle $\beta$, an aperture azimuth angle $\gamma$ and a solar azimuth angle A.

Preferably the method according is characterized in that the temperature coefficient T is equal to 1 when a temperature is unknown or is calculated with the formula f2

$$T = \left(1 + C\left(T_C - T_{C\,ref}\right)\right)$$

wherein C is a temperature coefficient constant, $T_C$ is a photovoltaic array cells temperature and $T_{C\,ref}$ is a reference value of the photovoltaic array cells temperature, preferably 25 Celsius degree.

Preferably the method is characterized in that in the step S3 the Clear Sky Model is used to estimate total irradiance $G_{i,k}$ calculated with the formula f3

$$G_{i,k} = G_{b,n}\cos(\theta_i) + G_{d,h}\frac{1 + \cos(\beta)}{2} + \rho G_{t,h}\frac{1 - \cos(\beta)}{2}$$

wherein $G_{b,n}$ is a direct solar irradiance, preferably calculated with the formula f4

$$G_{b,n} = 950{,}2(1 - e^{-0{,}75\alpha})$$

wherein $G_{d,h}$ is a diffuse solar irradiance, preferably calculated with the formula f5

$$G_{d,h} = 14{,}29 + 21{,}04\left(\frac{\pi}{2} - \frac{(90 - \alpha)\pi}{180}\right)$$

wherein $G_{t,h}$ is a total irradiance on a horizontal surface, preferably is set to 0 or is calculated with the formula f6

$$G_{t,h} = G_{b,n} \cdot \cos(\theta_i) + G_{d,h}$$

wherein $\rho$ is reflectance of the surrounding surface, preferably $\rho$ is equal to 0, $\theta_i$ is an incidence angle describing the angle of the irradiance relative to the aperture normal.

Preferably the method according is characterized in that incidence angle $\theta_i$ is calculated for a fixed tilt angle with the formula f7

$$\cos(\theta_i) = \sin(\alpha) \cdot \cos(\beta) + \cos(\alpha) \cdot \sin(\beta) \cdot \cos(\gamma - A)$$

Preferably the method is characterized in that incidence angle $\theta_i$ is calculated for a single axis tracker tilt angle with the formula f8

$$\cos(\theta_i) = \sqrt{1 - (\cos(\alpha + \beta) - \cos(\alpha) \cdot \cos(\beta) \cdot (1 - \cos(\gamma - A))^2}$$

Preferably the method is characterized in that incidence angle $\theta_i$ is 1 for a two-axis tracker.

Preferably the method is characterized in that $PR_A$ is calculated with the formula f9

$$PR_A = \frac{Y_A}{Y_\gamma}$$

wherein $Y_A$ is an array energy output per rated kW, preferably calculated with the formula f10

$$Y_A = \frac{\sum_k P_{A,k} \cdot \tau}{P_0}$$

wherein $\tau$ is a duration of the $k^{th}$ recording interval within a reporting period, and $Y_\gamma$ is a reference yield, preferably calculated with the formula f11

$$Y_\gamma = \frac{\sum_k G_{i,k} \cdot \tau}{G_{i,ref}}$$

wherein $\tau$ is a duration of the $k^{th}$ recording interval within a reporting period.

Preferably the method is characterized in that the solar altitude angle $\alpha$ is calculated with the formula f12

$$\alpha = \sin^{-1}(\sin(\delta)\sin(\varphi) + \cos(\delta)\cos(\omega)\cos(\varphi))$$

wherein $\varphi$ is a latitude angle of the photovoltaic array, $\delta$ is a solar declination angle and $\omega$ is an hour angle, preferably the solar declination $\delta$ is calculated with the formula f13

$$\delta = \sin^{-1}(0{,}39795\cos(0{,}98563(N - 173)))$$

wherein $N$ is a number of days since January 1st, and the hour angle $\omega$ is preferably calculated with the formula f14

$$\omega = 360(t_s - 0{,}5)$$

wherein $t_s$ is a solar time.

Preferably the method is characterized in that the solar azimuth angle A is calculated with the formula f15

$$A = \begin{cases} 360 - A'', & \sin(\omega) > 0 \\ A'', & \sin(\omega) \le 0 \end{cases}$$

where f16

$$A'' = \cos^{-1}\left(\frac{\sin(\delta)\cos(\varphi) - \cos(\delta)\cos(\omega)\sin(\varphi)}{\cos(\alpha)}\right)$$

wherein $\varphi$ is a latitude angle of the photovoltaic array, $\delta$ is a solar declination angle and $\omega$ is an hour angle, preferably the solar declination $\delta$ is calculated with the formula

$$\delta = \sin^{-1}(0{,}39795\cos(0{,}98563(N - 173)))$$

wherien $N$ is a number of days since January 1st, and the hour angle $\omega$ is preferably calculated with the formula f14

$$\omega = 360(t_s - 0{,}5)$$

wherein $t_s$ is a solar time.

Preferably the method is characterized in that the solar time $t_s$ is calculated with the formula f17

$$t_s = LCT - \frac{EOT}{60} + LC + D$$

wherein LCT is a local clock time, LC is a longitude correction preferably calculated with a formula f18

$$LC = \frac{24}{360}(Local\ longitude - Longitude\ at\ Standard\ Time\ Zone\ Meridian)$$

wherein D is a step function defining whether or not daylight saving is in effect, 1 is yes, 0 is no, and EOT is an equation of time, which is preferably calculated with the formula f19

$$EOT = 60 \sum_{k=0}^{5} \left[ c_k \cos\left(\frac{360kl}{365,25}\right) + d_k \sin\left(\frac{360kl}{365,25}\right) \right]$$

wherein $l$ is a number of days into a leap year cycle with $l=1$ being January 1st and $l = 1461$ being December 31st of the 4th year of the leap year cycle, $c_k$ and $d_k$ are given in a table

| K | $c_k$(hr) | $d_k$(hr) |
|---|-----------|-----------|
| 0 | 2,0870 x $10^{-4}$ | 0 |
| 1 | 9,2869 x $10^{-3}$ | -1,2229 x $10^{-1}$ |
| 2 | -5,2258 x $10^{-2}$ | -1,5698 x $10^{-1}$ |
| 3 | -1,3077 x $10^{-3}$ | -5,1602 x $10^{-3}$ |
| 4 | -2,1867 x $10^{-3}$ | -2,9823 x $10^{-3}$ |
| 5 | -1,5100 x $10^{-4}$ | -2,3463 x $10^{-4}$ |

Preferably the method is characterized in that the method comprises a step of S2 Cleaning data related to the DC power signal from at least one photovoltaic panel, preferably performed between the steps S1 and S3.

Preferably the method is characterized in that in the step S6 the cost function is a minimal cost function and is calculated with a gradient descent method or with Nelder-Mead method.

The inventive method provides an estimation of the orientation of the photovoltaic panels within a plant purely on the basis of measurements of DC power. This DC power may be measured by a solar inverter or otherwise. The method allows the number of tracking axes (whether the panels are in a fixed configuration, whether they have a single axis tracker and whether they have a dual-axis tracker) to be determined, and also outputs the associated azimuth angle (angle of the panels relative to North) and tilt angle (angle of the panels relative to the horizon/zenith). By providing this information, the current and future energy output of the plant may be estimated; information which may be used for service and optimization activities. In particular, such information allows the performance (in terms of power output relative to expected power output) of two or more photovoltaic systems to be compared, regardless of their location in the world.

The present invention is presented in figures, in which:

Fig. 1 presents a photovoltaic panel with respect to all relevant angles used in the present method (W. Stine and M. Geyer, "Power From The Sun," Stine, W.B.; Geyer, M., 2001. [Online]. Available: http://www.powerfromthesun.net/book.html. [Accessed 25 04 2016]), on which fig. 1a presents observer - Sun Angles, and fig. 1b presents plane of photovoltaic panel - Sun Angles,

Fig. 2 is a flow diagram showing the steps taken in the inventive method

Fig. 3 presents an estimated Beam and Diffuse Irradiance as estimated using a clear sky model, in this instance the Daneshyar-Paltridge-Proctor model (M. Reno, C. Hansen and J. Stein, "Global horizontal irradiance clear sky models: Implementation and analysis," SANDIA report SAND2012-2389, 2012)

Fig. 4 presents a cleaned DC power with data samples identified as being during clear sky periods (from Step S4) marked as stars on the graph.

The inventive method provides an estimation of the orientation of the photovoltaic panels within a plant purely on the basis of measurements of DC power. This DC power may be measured by a solar inverter or otherwise. Specifically, the invention is based on identifying periods of clear-sky (i.e. where there were no cloud occlusions) in a measured DC power and subsequently fitting parameters to functions describing the DC power generated in the cased of fixed panel mounting, single-axis tracker and dual-axis tracker so that the difference between the DC power measured on clear days and that which is estimated by the various functions is minimized. Whichever parameter set (number of tracking axes, azimuth angle, tilt angle, average performance ratio, temperature coefficient) has the minimal cost (i.e. minimizes the difference between the measured and estimated DC power) is selected as the true parameter set. This parameter set can subsequently be used for estimating the power output of the plant.

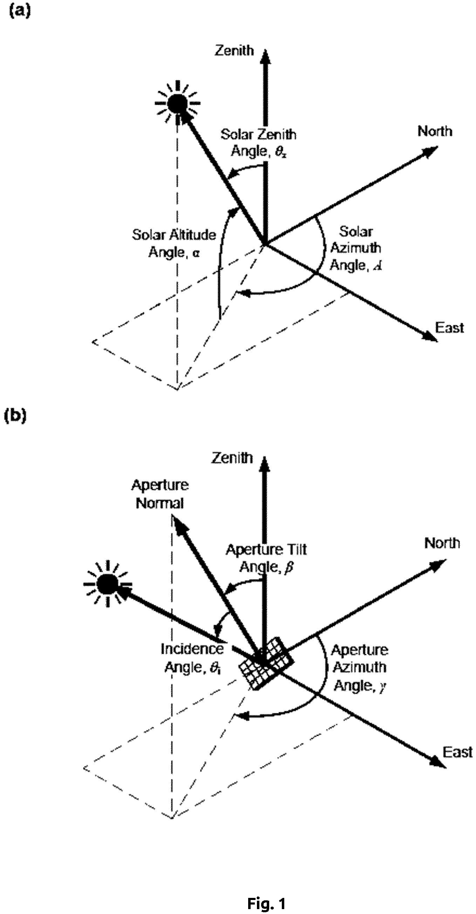

Fig. 1 (a) shows schematic highlighting the angles which define the amount of irradiance falling on a photovoltaic panel (W. Stine and M. Geyer, "Power From The Sun," Stine, W.B.; Geyer, M., 2001. [Online]. Available: http://www.powerfromthesun.net/book.html. [Accessed 25 04 2016]). As highlighted in Fig. 1 (a), the position of the sun relative to an observer is dictated by two angles, the solar azimuth angle, A and the solar altitude angle, $\alpha$. Sometimes, the solar zenith angle $\theta_z$ is adopted instead of the solar altitude angle ($\theta_z$ = 90 - $\alpha$). Note in this derivation all angles are given in degrees. For detailed derivations of expressions describing each of these angles, readers are guided to (W. Stine and M. Geyer, "Power From The Sun," Stine, W.B.; Geyer, M., 2001. [Online]. Available: http://www.powerfromthesun.net/book.html. [Accessed 25 04 2016])

The solar altitude angle, $\alpha$, is defined as the angle between the central ray of the sun and a horizontal plane containing the observer. It may be given as

$$\alpha = \sin^{-1}(\sin(\delta)\sin(\phi) + \cos(\delta)\cos(\omega)\cos(\phi)) \qquad (1)$$

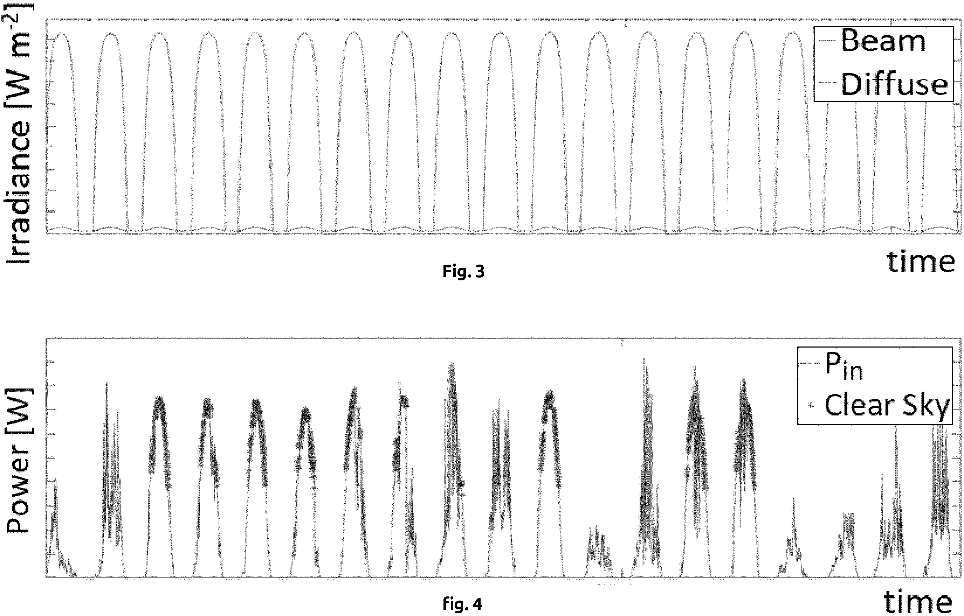

where $\phi$ is the latitude angle of the observer. $\delta$ is the solar declination angle which is the angle between the equatorial plane and the line connecting the center of the sun to the center of the earth. $\omega$ is the hour angle, which is the angular distance between the meridian of the observer and the meridian whose plan includes the sun. The solar declination angle, $\delta$, and the hour angle, $\omega$, can be determined via various empirical equations known in the state of the art. - see Fig. 3(a)). It may be approximated by

$$\delta = \sin^{-1}(0.39795\cos(0.98563(N-173))) \qquad (2)$$

where $N$ is the number of days since January 1st. The hour angle, $\omega$, is the angular distance between the meridian of the observer and the meridian whose plan includes the sun (see Fig. 3(a)). It may be given simply as

$$\omega = 360(t_s - 0.5) \qquad (3)$$

where $t_s$ is solar time given as

$$t_s = LCT - \frac{EOT}{60} + LC + D \qquad (4)$$

In Eq. (4) *LCT* is the local clock time, LC is the longitude correction, defined as

$$LC = \frac{24}{360} \text{ (Local Longitude–Longitude at Standard Time Zone Meridian)} \qquad (5)$$

*D* is a step function defining whether or not daylight saving is in effect (1 is yes, 0 otherwise) and *EOT* is the equation of time. The Equation of Time (*EOT*) is a correction factor designed to account for the difference between the mean solar time and the true solar time); it may be approximated as

$$EOT = 60 \sum_{k=0}^{5} \left[ c_k \cos\left(\frac{360kl}{365,25}\right) + d_k \sin\left(\frac{360kl}{365,25}\right) \right] \qquad (6)$$

where *l* is the number of days into a leap year cycle with *l* = 1 being January 1st and *l* = 1461 being December 31st of the 4th year of the leap year cycle. The Fourier coefficients $c_k$ and $d_k$ are given in Table 1.

The solar azimuth angle, *A*, defines the angle of the sun along the horizon plane from North. Due to the trigonometry involved there are two possible ways of calculating this angle, here we present one approach

$$A = \begin{cases} 360 - A'', & \sin(\omega) > 0 \\ A'', & \sin(\omega) \leq 0 \end{cases} \tag{7}$$

where

$$A'' = \cos^{-1}\left(\frac{\sin(\delta)\cos(\varphi) - \cos(\delta)\cos(\omega)\sin(\varphi)}{\cos(\alpha)}\right) \tag{8}$$

The angles which define the position of the sun relative to an observer, the solar azimuth angle, *A* and the solar altitude angle, $\alpha$, may be calculated for a given timestamp, assuming that the location of the observer (in terms of longitude and latitude angle) is known.

Table 1. Fourier Coefficients for Equation of Time (Eq. (6))

| k | ck (hr) | dk (hr) |
|---|---------|---------|
| 0 | 2.0870 x 10-4 | 0 |
| 1 | 9.2869 x 10-3 | -1.2229 x 10-1 |
| 2 | -5.2258 x 10-2 | -1.5698 x 10-1 |
| 3 | -1.3077 x 10-3 | -5.1602 x 10-3 |
| 4 | -2.1867 x 10-3 | -2.9823 x 10-3 |
| 5 | -1.5100 x 10-4 | -2.3463 x 10-4 |

The amount of solar irradiation reaching the surface of the earth is a function of the square of the distance of the earth from the sun and atmospheric effects (ignoring obstacles such as clouds, shading, etc.). Irradiance on a panel is a combination of direct component and diffuse component There are a number of empirical so-called 'Clear-Sky' models known in the state of the art for estimating the solar irradiance reaching the surface of the earth. For example, the Daneshyar-Paltridge-Proctor model estimates the direct solar irradiance, $G_{b,n}$ as:

$$G_{b,n} = 950.2\left(1 - e^{-0.075\alpha}\right) \tag{9}$$

In addition to the direct solar irradiance, diffuse solar irradiance describes the irradiance that has been scattered / reflected from the direct solar irradiance from particles in the atmosphere. The Daneshyar-Paltridge-Proctor model (DP) estimates the diffuse solar irradiance, $G_{d,h}$ as:

$$G_{d,h} = 14,29 + 21,04\left(\frac{\pi}{2} - \frac{(90 - \alpha)\pi}{180}\right) \tag{10}$$

The total irradiance on a horizontal surface (i.e. oriented parallel with the ground, e.g. a horizontally oriented pyranometer, Global Horizontal Irradiance) may be given as

$$G_{t,h} = G_{b,n} \cdot \cos(\theta_i) + G_{d,h} \tag{11}$$

where $G_{b,n}$ is the direct solar irradiance and $G_{d,h}$ is the diffuse solar irradiance, both of which can be determined via various empirical equations known in the state of the art.

The amount of solar irradiance falling on a panel at any given time will depend on the angle of the panel relative to the position of the sun. Fig. 1 (b) depicts the main angles associated with the angle of a solar panel. Like the solar azimuth angle, *A*, the aperture azimuth, $\gamma$, describes the orientation of a panel along the horizon plane from North. The aperture tilt angle, $\beta$, defines the angle of the aperture vector normal relative to the zenith (in fact from simple geometric considerations it also defines the angle of plane of the panel relative to the horizontal). The incidence angle, $\theta_i$, describes

the angle of the irradiance relative to the aperture normal.

Assuming a fixed tilt angle, it may be shown (W. Stine and M. Geyer, "Power From The Sun," Stine, W.B.; Geyer, M., 2001. [Online]. Available: http://www.powerfromthesun.net/book.html. [Accessed 25 04 2016]) that the incidence angle may be given as

$$\cos(\theta_i) = \sin(\alpha) \cdot \cos(\beta) + \cos(\alpha) \cdot \sin(\beta) \cdot \cos(\gamma - A) \qquad (12)$$

This equation may be used to identify the optimum tilt angle, $\beta$, for a particular location. Many plants also include either single- or two-axis trackers. These are mechanical systems which attempt to orient the panels in a way that minimizes the incidence angles. If we consider a single axis tracker, and assume that it is performing optimally (i.e. the panel is always oriented in the direction which minimizes the incidence angle), the irradiance incident on the panel may be given as (W. Stine and M. Geyer, "Power From The Sun," Stine, W.B.; Geyer, M., 2001. [Online]. Available: http://www.powerfromthesun.net/book.html. [Accessed 25 04 2016])

$$\cos(\theta_i) = \sqrt{1 - (\cos(\alpha + \beta) - \cos(\alpha) \cdot \cos(\beta) \cdot (1 - \cos(\gamma - A))^2} \qquad (13)$$

Finally, if we once again assume an optimally performing two-axis tracker, the incident angle may simply be given as

$$\cos(\theta_i) = 1 \qquad (14)$$

In addition to the direct component, there will also be direct and diffuse irradiance reaching an aperture (i.e. a solar panel). Hence, the total irradiance reaching an aperture (i.e. a solar panel), which is also known as the plane of array irradiance $G_i$ may be given by

$$G_{i,k} = G_{b,n}\cos(\theta_i) + G_{d,h}\frac{1+\cos(\beta)}{2} + \rho G_{t,h}\frac{1-\cos(\beta)}{2} \qquad (14)$$

where $\rho$ is the reflectance of the surrounding surface (e.g. grass, sand, etc.). In this analysis we make the simplifying assumption that we may neglect this third term (assume that the reflectance of the surrounding surface is zero - or more exactly that its effects are captured in the fitted parameters).

The IV curve of a photovoltaic panel is a combination of a diode equations (describing the panel as a semiconductor) and the photocurrent. The output current I for a given terminal voltage V may be given as (L. Bun, Detection et localisation de defauts pour un systeme PV.., Universite de Grenoble, France: Ph.D. Thesis, 2011; J. W. Bishop, "Computer simulation of the effects of electrical mismatches in photovoltaic cell interconnection circuits," Solar cells, vol. 25, no. 1, pp. 73-89, 1988)

$$I = I_{ph} - I_0\left(exp\left(\frac{V+R_S I}{V_t}\right) - 1\right) - I_{sh} \qquad (15)$$

where $I_{ph}$ is the photocurrent, $I_0$ is the reverse saturation current of the diode, $I_{sh}$ is the shunt or leakage current, $R_s$ is the series resistance and $V_t$ is the thermal voltage of the diode.

The photocurrent generated in a photovoltaic panel is the electric current in the cells occurring as a result of the photovoltaic effect. It may be given as

$$I_{ph} = \frac{G}{G_{STC}}\left(I_{ph,STC} + C\left(T_C - T_{C,STC}\right)\right) \qquad (16)$$

where $G$ is the irradiance received by the solarcell, $G_{STC}$ is the irradiance received by the solar cell under standard test conditions (1000 W m$^{-2}$), $T_c$ is the cell temperature, $T_{c,STC}$ is the cell temperature under standard test conditions (25 °C), C is the temperature coefficient of the short-circuit current in the cell, and $I_{ph,STC}$ is the photocurrent under standard test conditions (L. Bun, Detection et localisation de defauts pour un systeme PV.., Universite de Grenoble, France: Ph.D.

Thesis, 2011).

International Standard IEC 61724 (IEC, *61724-1 INTERNATIONAL STANDARD Photovoltaic system performance -Part 1: Monitoring,* IEC, 2017) defines a number of metrics used for classifying the performance of a photovoltaic system. The photovoltaic array DC output energy $E_A$ is given by:

$$E_A = \sum_k P_{A,k} \cdot \tau \qquad (17)$$

Where, $P_{A,k}$ is the array power (DC), and $\tau$ is the duration of the kth recording interval within a reporting period. The photovoltaic array energy yield $Y_A$ is the array energy output (DC) per rated kW (DC) of installed photovoltaic array

$$Y_A = \frac{E_A}{P_0} \qquad (18)$$

where $P_0$ is the array power rating (DC).

The irradiation (AKA insolation) $H$ is the time integral of irradiance.

$$H_i = \sum_k G_{i,k} \cdot \tau \qquad (19)$$

The reference yield $Y_r$ can be calculated by dividing the total in-plane irradiation by the module's reference plane of array irradiance

$$Y_r = \frac{H_i}{G_{i,ref}} \qquad (20)$$

where the reference plane of array irradiance $G_{i,ref}$ is the irradiance at which $P_0$ is determined.

This all ultimately leads to a definition of the performance ratio *PR,* a widely accepted and used metric for evaluating the efficiency of a photovoltaic system

$$PR = \frac{Y_f}{Y_r} \qquad (21)$$

where $Y_f$ is the final photovoltaic system yield given as is the net energy output of the entire photovoltaic system (AC) per rated kW (DC) of installed photovoltaic array, $P_0$ (similar to Eq. (18) only considering AC power as opposed to DC).

If instead of the final photovoltaic system yield $Y_f$, we use the photovoltaic array energy yield $Y_a$, we obtain a measure or the performance (efficiency) of the photovoltaic array (panels, cabling up to the input of the inverter)

$$PR_A = \frac{Y_a}{Y_r} \qquad (22)$$

In the IEC standard (IEC, *61724-1 INTERNATIONAL STANDARD Photovoltaic system performance -Part 1: Monitoring,* IEC, 2017), Eq. (22) is defined or the identifying the efficiency of the total system (panels, balance of system components, inverter, etc.). If we consider instantaneous values, Eq. (22) may be expanded to give a simple model or estimating the DC array power (assuming knowledge of the performance ratio of the array)

$$P_A, k = PR_A \frac{P_0}{G_{i,ref}} G_{i,k} \qquad (17)$$

IEC 61724 (IEC, *61724-1 INTERNATIONAL STANDARD Photovoltaic system performance -Part 1: Monitoring,* IEC, 2017) also notes that an improved measure of performance ratio can be obtained through the inclusion of a term to account for variations in cell temperature (this is evident from Eq. (16))

$$PR' = PR\left(1 + C\left(T_c - T_{c,STC}\right)\right) \qquad (24)$$

Substituting this into Eq. (23) yields an estimate of the DC array power

$$P_{A,k} = PR_A\left(1 + C\left(T_c - T_{c,STC}\right)\right)\frac{P_0}{G_{i,ref}} \qquad (25)$$

It is evident that in order to accurately evaluate the performance, or indeed estimate DC power generated by a photovoltaic panel (and subsequently AC power from the inverter), it is necessary to accurately estimate the plane of array irradiance $G_i$. Unfortunately it is often the case that the irradiance is not measured in the plane of the array (either only a global horizontal irradiance is available, or no measured irradiance is available). In this situation the in-plane irradiance must be estimated, which as shown from Eqs. (12-14), requires knowledge of the number of tracking axes, the aperture azimuth, $\gamma$, and the aperture tilt angle, $\beta$.

Many of the variables in Eq. (25) can either be measured directly by a solar inverter, or may be estimated. The array DC power, $P_{A,k}$, is typically measured for each DC/DC (MPPT) booster stage in the inverter. Assuming that the longitude and latitude of the photovoltaic site is available, the position of the sun (solar angles) may also be estimated using Eqs. (1-8) and empirical equations known in the state of the art. In the absence of a measured irradiance signal, the irradiance on a clear day may be estimated from Eqs. (9-10) (although other clear sky models are also applicable). Hence we may recast Eq. (25) as three different cost function to be optimized in order to identify the remaining unknown parameters

$$J_N(PR_A, T, P_0, G_{i,k}) = \frac{1}{2m}\sum_{k=1}^{m}\left(\left(PR_A\left(1 + C\left(T_c - T_{c,STC}\right)\right)P_0 \cdot \frac{G_{i,k}}{G_{i,ref}}\right) - P_{A,k}\right)^2 \quad (26)$$

Where N = 0,1,2 indicates the number of tracking angles $\cos(\theta_{0,k})$ being given by Eq. (12), $\cos(\theta_{1,k})$ being given by Eq. (13) and $\cos(\theta_{2,k})$ being given by Eq. (14). The minimum of the cost functions for each number of tracking axes may be found using optimization algorithms such as gradient descent, or in the preferred embodiment, multidimensional unconstrained nonlinear minimization (Nelder-Mead). The parameter set $PR_A$, $C$, $\beta, \gamma$ and configuration N = 0, 1 or 2 which results in the minimum cost (i.e. which matches the measured behavior most accurately) is chosen as the true configuration. This information can be subsequently be used to estimate yield as per equation (23). The same equation may be presented as

$$J_N(PR_A, T, P_0, G_{i,k}) = \frac{1}{2m}\sum_{k=1}^{m}\left(\left(PR_A \cdot T \cdot P_0 \cdot \frac{G_{i,k}}{G_{i,ref}}\right) - P_{A,k}\right)^2$$

wherein N = 0,1,2 indicates the number of tracking angles, m is a number of data samples, $P_{A,k}$ is a measured DC power value of the photovoltaic array, $G_{i,ref}$ is a reference total irradiance reaching an aperture reaching the photovoltaic array, $PR_A$ is an efficiency of the photovoltaic array, T is temperature coefficient equal to $(1 + C(T_c - T_{c,STC}))$, $P_0$ is an array power rating, $G_{i,k}$ is an estimated total irradiance reaching an aperture of the photovoltaic array as a function of a solar altitude angle $\alpha$, a tilt angle $\beta$, an aperture azimuth angle $\gamma$ and a solar azimuth angle $A$. It is not a necessary requirement that the temperature coefficient is included into the model. In the case that it is omitted, $T$ is set equal to 1.

In the present description index STC (standard test condition) is interchangeably used with ref (reference).

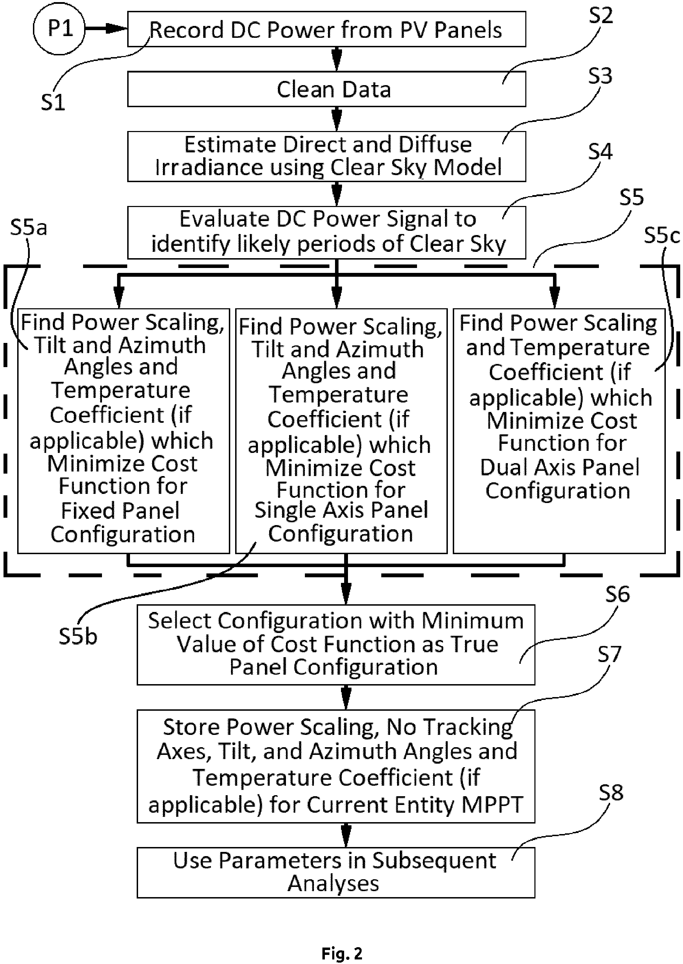

The inventive method is implemented according to the steps shown in the flow diagram given in Fig. 2.

At Step S1 DC Power is measured and stored from a photovoltaic Array. Additional information such as the longitude and latitude of the plant are provided as parameter set P1. Solar inverters often incorporate multiple DC/DC booster (MPPT) stages, each recording the DC power from one or more connected strings with panels in each string typically (though not always in some roof top applications) mounted in the same orientation. In such cases, the inventive method would be performed for DC power measurements recorded for each MPPT stage.

At Step S2 the data is cleaned using methods known in the state of the art (for example from International Standard IEC 61724 (IEC, *61724-1 INTERNATIONAL STANDARD Photovoltaic system performance - Part 1: Monitoring*, IEC, 2017)).

At Step S3 the direct (or beam) irradiance and the diffuse irradiance is estimated using a clear sky model (e.g. Eqs. (9-10)). Examples of beam and diffuse irradiance for a particular site, as estimated using the Daneshyar-Paltridge-Proctor model (M. Reno, C. Hansen and J. Stein, "Global horizontal irradiance clear sky models: Implementation and analysis," SANDIA report SAND2012-2389, 2012) is given in Fig. 3.

At Step S4 the cleaned DC power is analyzed in order identify periods of clear sky (i.e. no cloud occlusions). The cleaned DC Power output from Step S2 and is compared to the clear sky irradiance output from Step S3 according to a range of criteria. Fig. 4 shows a cleaned DC power with data samples identified as being during clearsky periods highlighted as stars.

At Step S5 the cleaned DC power during periods of clear sky is used as inputs to three cost functions, described by Eq. (26). The minimum of the cost functions or each number of tracking axes may be found using optimization algorithms such as gradient descent, or in the preferred embodiment, multidimensional unconstrained nonlinear minimization (Nelder-Mead). Step S5a calculates the parameter set $PR_A$, $C$, $\beta, \gamma$ for a fixed mounted array of panels, Step S5b calculates the parameter set $PR_A$, $C$, $\beta, \gamma$ for an array of panels mounted with a single axis tracker and Step S5c calculates the parameter set $PR_A$, $C$ for an array of panels mounted with a dual axis tracker.

At Step S6 the parameter set $PR_A$, $C$, $\beta, \gamma$ and configuration N = 0, 1 or 2 which results in the minimum cost (i.e. which matches the measured behavior most accurately) is chosen as the true configuration.

At Step S7 the parameter set $PR_A$, $C$, $\beta, \gamma$ and configuration N = 0, 1 or 2 is stored for the current entity.

At Step S8 the stored parameters are subsequently be used to estimate yield as perequation (23). Stored parameters may also be used for adjusting the photovoltaic array for better performance or for starting an alarm.

Measured values of cell temperature are not always available. In this case, ambient temperature may be used. Should neither cell or ambient temperature be available, the term $C(T_k\text{-}25)$ is omitted from Eq. (26).

**Claims**

1. A method for estimating configuration parameters of a photovoltaic array, said method comprising the steps of:

    • S1 recording of DC power signal from at least one photovoltaic panel,
    • S3 estimating irradiance using a Clear Sky model, wherein the Clear Sky model is a model for estimating the solar irradiance reaching the surface of the earth,
    • S4 evaluating DC power signal to identify likely periods of a clear sky,
    • S5 determining power scaling, tilt and azimuth angle for a fixed panel configuration, a single axis panel configuration and a dual axis panel configuration,
    • S6 selecting from the following configurations: the fixed panel configuration, the single axis panel configuration and the dual axis panel configuration, the configuration with a minimum value of a cost function as true panel configuration,
    • S7 storing power scaling, tracking axes, tilt and azimuth for current entity.

2. The method according to claim 1, **characterized in that** the method comprises one or more step of performing an action based on stored parameters, wherein the steps of performing an action are:

    - S8a adjusting the photovoltaic array for better performance and/or
    - S8b starting an alarm.

3. The method according to claim 1 or 2, **characterized in that** in the step S6 the cost function is calculated with the formula f1

$$ J_N(PR_A, T, P_0, G_{i,k}) = \frac{1}{2m} \sum_{k=1}^{m} \left( \left( PR_A \cdot T \cdot P_0 \cdot \frac{G_{i,k}}{G_{i,ref}} \right) - P_{A,k} \right)^2 $$

wherein N = 0,1,2 indicates the number of tracking angles, m is a number of data samples, $P_{A,k}$ is a measured DC power value of the photovoltaic array, $G_{i,ref}$ is a reference total irradiance reaching an aperture reaching the photovoltaic array, $PR_A$ is an efficiency of the photovoltaic array, T is temperature coefficient, $P_0$ is an array power rating, $G_{i,k}$ is an estimated total irradiance reaching an aperture of the photovoltaic array as a function of a solar altitude angle $\alpha$, a tilt angle $\beta$, an aperture azimuth angle $\gamma$ and a solar azimuth angle A.

4. The method according to claim 3, **characterized in that** the temperature coefficient T is equal to 1 when a temperature is unknown or is calculated with the formula f2

$$T = \left(1 + C\left(T_C - T_{C\,ref}\right)\right)$$

wherein C is a temperature coefficient constant, $T_C$ is a photovoltaic array cells temperature and $T_{C\,ref}$ is a reference value of the photovoltaic array cells temperature, preferably 25 Celsius degree.

5. The method according to claim 3 or 4, **characterized in that** in the step S3 the Clear Sky Model is used to estimate total irradiance $G_{i,k}$ calculated with the formula f3

$$G_{i,k} = G_{b,n}\cos(\theta_i) + G_{d,h}\frac{1 + \cos(\beta)}{2} + \rho G_{t,h}\frac{1 - \cos(\beta)}{2}$$

wherein $G_{b,n}$ is a direct solar irradiance, preferably calculated with the formula f4

$$G_{b,n} = 950,2(1 - e^{-0,75\alpha})$$

wherein $G_{d,h}$ is a diffuse solar irradiance, preferably calculated with the formula f5

$$G_{d,h} = 14,29 + 21,04\left(\frac{\pi}{2} - \frac{(90 - \alpha)\pi}{180}\right)$$

wherein $G_{t,h}$ is a total irradiance on a horizontal surface, preferably is set to 0 or is calculated with the formula f6

$$G_{t,h} = G_{b,n} \cdot \cos(\theta_i) + G_{d,h}$$

wherein $\rho$ is reflectance of the surrounding surface, preferably $\rho$ is equal to 0, $\theta_i$ is an incidence angle describing the angle of the irradiance relative to the aperture normal.

6. The method according to claim 5, **characterized in that** incidence angle $\theta_i$ is calculated for a fixed tilt angle with the formula f7

$$\cos(\theta_i) = \sin(\alpha) \cdot \cos(\beta) + \cos(\alpha) \cdot \sin(\beta) \cdot \cos(\gamma - A)$$

7. The method according to claim 5, **characterized in that** incidence angle $\theta_i$ is calculated for a single axis tracker tilt angle with the formula f8

$$\cos(\theta_i) = \sqrt{1 - (\cos(\alpha + \beta) - \cos(\alpha) \cdot \cos(\beta) \cdot (1 - \cos(\gamma - A))^2}$$

8. The method according to claim 5, **characterized in that** incidence angle $\theta_i$ is 1 for a two-axis tracker.

9. The method according to anyone of claims 3-8, **characterized in that** $PR_A$ is calculated with the formula f9

$$PR_A = \frac{Y_A}{Y_\gamma}$$

wherein $Y_A$ is an array energy output per rated kW, preferably calculated with the formula f10

$$Y_A = \frac{\sum_k P_{A,k} \cdot \tau}{P_0}$$

wherein $\tau$ is a duration of the $k^{th}$ recording interval within a reporting period, and $Y_\gamma$ is a reference yield, preferably calculated with the formula f11

$$Y_\gamma = \frac{\sum_k G_{i,k} \cdot \tau}{G_{i,ref}}$$

wherein $\tau$ is a duration of the $k^{th}$ recording interval within a reporting period.

10. The method according to any one of claims 3-9, **characterized in that** the solar altitude angle $\alpha$ is calculated with the formula f12

$$\alpha = \sin^{-1}(\sin(\delta)\sin(\varphi) + \cos(\delta)\cos(\omega)\cos(\varphi))$$

wherein $\varphi$ is a latitude angle of the photovoltaic array, $\delta$ is a solar declination angle and $\omega$ is an hour angle, preferably the solar declination $\delta$ is calculated with the formula f13

$$\delta = \sin^{-1}(0{,}39795\cos(0{,}98563(N - 173)))$$

wherein $N$ is a number of days since January 1st, and the hour angle $\omega$ is preferably calculated with the formula f14

$$\omega = 360(t_s - 0{,}5)$$

wherein $t_s$ is a solar time.

11. The method according to any one of claims 1-10, **characterized in that** the solar azimuth angle A is calculated with the formula f15

$$A = \begin{cases} 360 - A", & \sin(\omega) > 0 \\ A", & \sin(\omega) \leq 0 \end{cases}$$

where f16

$$A" = \cos^{-1}\left(\frac{\sin(\delta)\cos(\varphi) - \cos(\delta)\cos(\omega)\sin(\varphi)}{\cos(\alpha)}\right)$$

wherein $\varphi$ is a latitude angle of the photovoltaic array, $\delta$ is a solar declination angle and $\omega$ is an hour angle, preferably the solar declination $\delta$ is calculated with the formula

$$\delta = \sin^{-1}(0{,}39795\cos(0{,}98563(N - 173)))$$

wherein $N$ is a number of days since January 1st, and the hour angle $\omega$ is preferably calculated with the formula f14

$$\omega = 360(t_s - 0{,}5)$$

wherein $t_s$ is a solar time.

**12.** The method according to claim 10 or 11, **characterized in that** the solar time $t_s$ is calculated with the formula f17

$$t_s = LCT - \frac{EOT}{60} + LC + D$$

wherein LCT is a local clock time, LC is a longitude correction preferably calculated with a formula f18

$$LC = \frac{24}{360} (Local\ longitude - Longitude\ at\ Standard\ Time\ Zone\ Meridian)$$

wherein D is a step function defining whether or not daylight saving is in effect, 1 is yes, 0 is no, and EOT is an equation of time, which is preferably calculated with the formula f19

$$EOT = 60 \sum_{k=0}^{5} \left[ c_k \cos\left(\frac{360kl}{365,25}\right) + d_k \sin\left(\frac{360kl}{365,25}\right) \right]$$

wherein l is a number of days into a leap year cycle with l=1 being January 1st and $l$ = 1461 being December 31st of the 4th year of the leap year cycle, $c_k$ and $d_k$ are given in a table

| K | $c_k$(hr) | $d_k$(hr) |
|---|-----------|-----------|
| 0 | $2{,}0870 \times 10^{-4}$ | 0 |
| 1 | $9{,}2869 \times 10^{-3}$ | $-1{,}2229 \times 10^{-1}$ |
| 2 | $-5{,}2258 \times 10^{-2}$ | $-1{,}5698 \times 10^{-1}$ |
| 3 | $-1{,}3077 \times 10^{-3}$ | $-5{,}1602 \times 10^{-3}$ |
| 4 | $-2{,}1867 \times 10^{-3}$ | $-2{,}9823 \times 10^{-3}$ |
| 5 | $-1{,}5100 \times 10^{-4}$ | $-2{,}3463 \times 10^{-4}$ |

**13.** The method according to any one of claims 1-12, **characterized in that** the method comprises a step of S2 Cleaning data related to the DC power signal from at least one photovoltaic panel, preferably performed between the steps S1 and S3.

**14.** The method according to any one of claims 1-13, **characterized in that** in the step S6 the cost function is a minimal cost function and is calculated with a gradient descent method or with Nelder-Mead method.

(a)

(b)

**Fig. 1**

**Fig. 2**

Fig. 3

fig. 4

EP 3 845 985 A1

Europäisches
Patentamt

European
Patent Office

Office européen
des brevets

**EUROPEAN SEARCH REPORT**

Application Number

EP 19 22 0224

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 8 682 585 B1 (HOFF THOMAS E [US]) 25 March 2014 (2014-03-25) * abstract * * column 1, lines 26-35, 51-58 * * column 2, lines 1-7 * * column 4, line 54 - column 5, line 42 * * column 7, line 16 - column 9, line 53 * * column 30, line 26 - columns 34-38 * ----- | 1-14 | INV. G05B23/02 |
| A | US 2014/149038 A1 (CRONIN ALEXANDER D [US] ET AL) 29 May 2014 (2014-05-29) * figure 4 * ----- | 1 | |

TECHNICAL FIELDS
SEARCHED (IPC)

G05B
H02J

The present search report has been drawn up for all claims

| Place of search | Date of completion of the search | Examiner |
|---|---|---|
| Munich | 18 June 2020 | Messelken, M |

**EP 3 845 985 A1**

## ANNEX TO THE EUROPEAN SEARCH REPORT
## ON EUROPEAN PATENT APPLICATION NO.

EP 19 22 0224

18-06-2020

| Patent document cited in search report | | Publication date | Patent family member(s) | | Publication date |
|---|---|---|---|---|---|
| US 8682585 | B1 | 25-03-2014 | US | 8682585 B1 | 25-03-2014 |
| | | | US | 2014207437 A1 | 24-07-2014 |
| US 2014149038 | A1 | 29-05-2014 | NONE | | |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9686122 B2

**Non-patent literature cited in the description**

- **STINE, W.B. ; GEYER, M.** *Power From The Sun,* 2001, http://www.powerfromthesun.net/book.html.
- **M. RENO ; C. HANSEN ; J. STEIN.** Global horizontal irradiance clear sky models: Implementation and analysis. *SANDIA report SAND2012-2389,* 2012
- Detection et localisation de defauts pour un systeme PV. **L. BUN.** Ph.D. Thesis. Universite de Grenoble, 2011
- **J. W. BISHOP.** Computer simulation of the effects of electrical mismatches in photovoltaic cell interconnection circuits. *Solar cells,* 1988, vol. 25 (1), 73-89